# EUROPÄISCHE PATENTSCHRIFT

(11) **EP 1 512 512 B1**
(45) Veröffentlichungstag und Bekanntmachung des Hinweises auf die Patenterteilung: **06.06.2007**
(21) Anmeldenummer: 04103325.9
(22) Anmeldetag: 13.07.2004
(51) Int. Cl.: B29C 45/16, B29C 45/67

(54) **Spritzgiessvorrichtung**
Injection Moulding Device
Appareil de moulage par injection

(30) Priorität: 14.08.2003 DE 10337797; 19.05.2004 DE 102004024731
(43) Veröffentlichungstag der Anmeldung: 09.03.2005
(73) Patentinhaber: Adcuram Maschinenbauholding GmbH, 80333 München (DE)
(72) Erfinder: Fueller, Klaus, 19061, Schwerin (DE); Bielich, Norbert, 57223, Kreuztal (DE)
(74) Vertreter: Gosdin, Michael

(56) Entgegenhaltungen:
- EP-A- 1 225 025
- WO-A-00/12284
- WO-A-02/40196
- WO-A-89/02357
- WO-A-03/013824
- PATENT ABSTRACTS OF JAPAN Bd. 018, Nr. 650 (M-1719), 9. Dezember 1994 (1994-12-09) -& JP 06 254906 A (MITSUBISHI HEAVY IND LTD), 13. September 1994 (1994-09-13)
- DATABASE WPI Section Ch, Week 197813 Derwent Publications Ltd., London, GB; Class A32, AN 1978-24150A XP002324961 -& JP 53 016074 A (JAPAN STEEL WORKS LTD) 14. Februar 1978 (1978-02-14)
- PATENT ABSTRACTS OF JAPAN Bd. 1995, Nr. 10, 30. November 1995 (1995-11-30) -& JP 07 186218 A (TOSHIBA MACH CO LTD; others: 01), 25. Juli 1995 (1995-07-25)

## Beschreibung

Die Erfindung betrifft eine Vorrichtung zum Verarbeiten, vorzugsweise Spritzgießen, von plastischen Massen, die mindestens zwei verschiebliche Formaufspannplatten umfaßt, an die je eine Plastifizier- und Einspritzeinheit angeordnet ist, wobei die mindestens zwei verschieblichen Formaufspannplatten aufeinander zu bewegbar sind, wobei zwischen den zwei verschieblichen Formaufspannplatten ein drehbares Mittelteil angeordnet ist.

Gattungsgemäße Vorrichtungen sind aus dem Stand der Technik bekannt. So beschreibt beispielsweise die EP 1 119 449 B 1 eine Horizontal-Spritzgießmaschine, bei der eine zentrale Wendeplatteneinheit zwischen zwei Spritzgießeinheiten angeordnet ist, wobei sich die zentrale Wendeplatteneinheit auf den Holmen abstützt.

Das Dokument WO-A-0240196 offenbart eine Vorrichtung gemäß dem Oberbegriff des Anspruchs 1.

**Aufgabe** der vorliegenden Erfindung ist es, die bekannten Vorrichtungen derart weiterzubilden, daß das drehbare Mittelteil in seiner Größe nicht von dem Freiraum zwischen den Holmen abhängig ist und unterschiedliche Schließkräfte von den beiden Spritzeinheiten auf das Mittelteil aufbringbar sind.

Die Erfindung wird durch die Merkmale des Anspruchs 1 definiert.

Das Mittelteil besteht aus einem drehbaren und einem festen Teilelement, wobei das drehbare Teilelement um seine vertikale Achse drehbar und das feste Teilelement ortsfest mit dem Maschinenbett verbunden ist und somit seine Position, bezogen auf das Maschinenbett, nicht veränderbar ist.

Bei der vorgeschlagenen Lösung stützt sich weder das drehbare Mittelteil noch das feste Teilelement auf den Maschinenholmen ab. Durch die Verbindung zum Maschinenbett ist eine ausreichende Abstützung gewährleistet, wodurch es möglich wird, unterschiedliche Schließkräfte auf die beiden Werkzeuge, die den beiden Plastifizier- und Einspritzeinheiten zugeordnet sind, aufzubringen.

Weiterbildungsgemäß ist vorgesehen, daß an den verschieblichen Formaufspannplatten, die gemäß der Erfindung die Düsenplatten sind, Holme angeordnet sind, die als Zugstangen ausgelegt sind. Beim Öffnen der Formaufspannplatten fahren die Holme ebenfalls vom drehbaren Mittelteil weg, so daß dieses frei drehen kann. Die Holme greifen in Aussparungen im Mittelteil ein. In den Aussparungen sind Buchsen angeordnet, über die die Holme mit den Holmen der gegenüberliegenden Formaufspannplatte verriegelt werden. Bei einer beidseitigen Ausführung mit 4 Holmen sind nur 4 Buchsen erforderlich.

Als eine weitere Ausgestaltung kann das drehbare Mittelteil mit dem Maschinenbett verschraubt werden. Dies hat den Vorteil, dass an der beschriebenen Spritzgießvorrichtung beidseitig vom Mittelteil unterschiedliche Werkzeuge aufgespannt werden können. Dies entspricht dann der sogenannten Tandem -Spritzgießmaschine. Bei Verwendung von acht kurzhubigen Hydraulikzylindern sind sogar (im Gegensatz zu Tandem - Spritzgießmaschinen) unterschiedliche Zykluszeiten für beide Seiten realisierbar, wodurch ein sehr universeller Einsatz der Einrichtung möglich ist. Diese Anwendungen erfordern kein Drehen des Mittelteils, so dass eine Fixierung (durch Verschrauben oder einen Indexstift) sinnvoll sein kann.

An der verschieblichen Formaufspannplatte sind Mittel vorgesehen, über die eine Zugkraft auf die Holme aufgebracht werden kann. Hierbei werden kurzhubige Hydraulikzylinder, fälschlicher Weise oftmals auch Druckkissen genannt, bevorzugt. Da die Holme mit den Holmen der gegenüberliegenden Formaufspannplatte verriegelt werden, entsteht quasi eine durchgehende Zugstange. Die Buchsen in dem Mittelteil müssen längsverschiebbar sein, damit der Einsatz der kurzhubigen Hydraulikzylinder auch in einer der Formaufspannplatten ausreichend ist. Die Zugkraft wird über die längsverschiebbare Buchse auf die andere Formaufspannplatte übertragen. Somit ist die Schließkraft beidseitig des Mittelteils gleich. Bei dieser Ausführung kann somit auf vier kurzhubige Hydraulikzylinder und auf vier Buchsen im Mittelteil verzichtet werden, wenn man den Einsatz von vier Holmen auf jeder Seite zugrunde legt. Alternativ können anstelle der drehbaren Buchsen querverschiebbare Verriegelungselemente, z.B. zwei Halbschalen mit Ringen, verwendet werden. Die Verriegelungselemente sind dann in der Platte quer zur Bewegungsrichtung verschiebbar.

Fortbildungsgemäß wird vorgeschlagen, daß die verschieblichen Formaufspannplatten im Maschinenbett geführt werden. Sie sind über Mittel in der Höhe verstellbar, die Anpassung an unterschiedliche Werkzeugeinbauhöhen ist selbstverständlich ebenfalls vorgesehen. Hierdurch wird erreicht, daß die Formaufspannplatten an unterschiedliche Werkzeuge angepaßt und darauf abgestimmt werden können.

Um einen ausreichenden Freiraum zu erreichen ist vorgesehen, daß die Plastifizier- und Einspritzeinheit so an den verschieblichen Formaufspannplatten angeordnet ist, daß diese bei der Bewegung der Formaufspannplatte mitgeführt wird.

Vorteilhafterweise ist ein Drehantrieb für das drehbare Mittelteil unter diesem Mittelteil angeordnet und im Maschinenbett integriert. Über diesen Drehantrieb wird es ermöglicht, das Mittelteil um 360° zu drehen. Bevorzugt wird jedoch eine Drehung um 180°.

In einer Weiterbildung wird angeregt, daß eine dritte verschiebliche Formaufspannplatte mit einer daran angeordneten Plastifizier- und Einspritzeinheit vorzugsweise rechtwinklig zu den beiden ersten verschieblichen Formaufspannplatten angeordnet ist und ebenfalls auf das ortsfeste drehbare Mittelteil zubewegbar ist.

Durch diese Fortbildung wird es ermöglicht, in den Prozeß einen weiteren Spritzvorgang zu integrieren. Dies kann eine andere Materialkomponente oder aber auch eine weitere Farbe sein.

In den Zeichnungen ist schematisch das Grundprinzip der Erfindung wiedergegeben. Es zeigt
- Fig. 1: die Vorrichtung in einer geöffneten Seitenansicht
- Fig. 2: die Vorrichtung in einer geöffneten Draufsicht
- Fig. 3: die Seitenansicht in geschlossener Stellung
- Fig. 4: die Draufsicht in geschlossener Stellung
- Fig. 5: das Mittelteil
- Fig. 6: eine Dreifachanordnung der Vorrichtung
- Fig. 7: Schnitt durch eine Formaufspannplatte

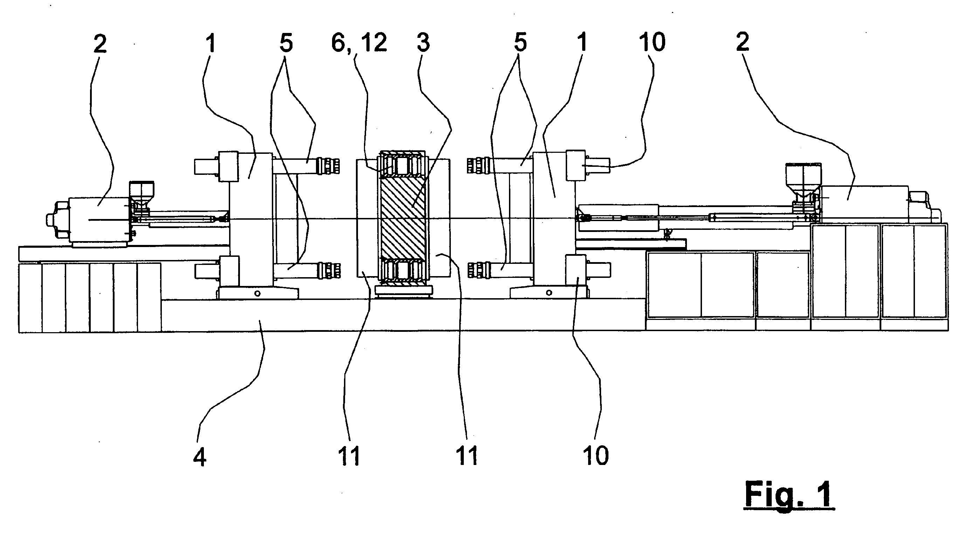

Fig. 1 zeigt die seitliche Ansicht der erfindungsgemäßen Vorrichtung im geöffneten Zustand. Die beiden verschieblichen Formaufspannplatten 1 mit den angeordneten Plastifizier- und Einspritzeinheiten 2 sind am Maschinenbett angeordnet. Zwischen diesen ist das drehbare Mittelteil 3 dargestellt, das mit dem Maschinenbett in Verbindung steht. Das Mittelteil 3 trägt je eine Werkzeughälfte 11. Die Holme 5 sind in den verschieblichen Formaufspannplatten 1 angeordnet und können in Aussparungen 6 im Mittelteil 3 verankert werden. Als Verriegelungselement sind in den Aussparungen Buchsen 12 mit Innenklauen vorgesehen.

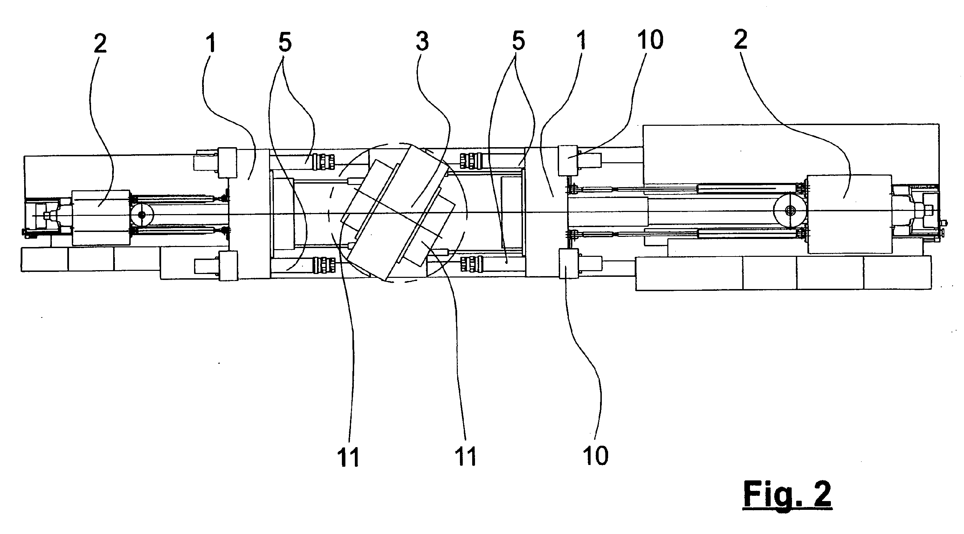

In der zurückgefahrenen Stellung bieten die Holme genügend Freiraum, so daß das Mittelteil 3 sich frei drehen kann. Dies wird aus der Darstellung gem. Fig. 2 deutlich. Hier ist eine Draufsicht der Vorrichtung dargestellt, bei der das Mittelteil 3 leicht gedreht ist. Die Werkzeughälften 11 können ungehindert an den Holmen 5 vorbeischwenken. Zur Aufbringung der erforderlichen Schließkraft sind Mittel zum Krafterzeugen, hier Druckkissen 10, an den verschieblichen Formaufspannplatten 1 angeordnet.

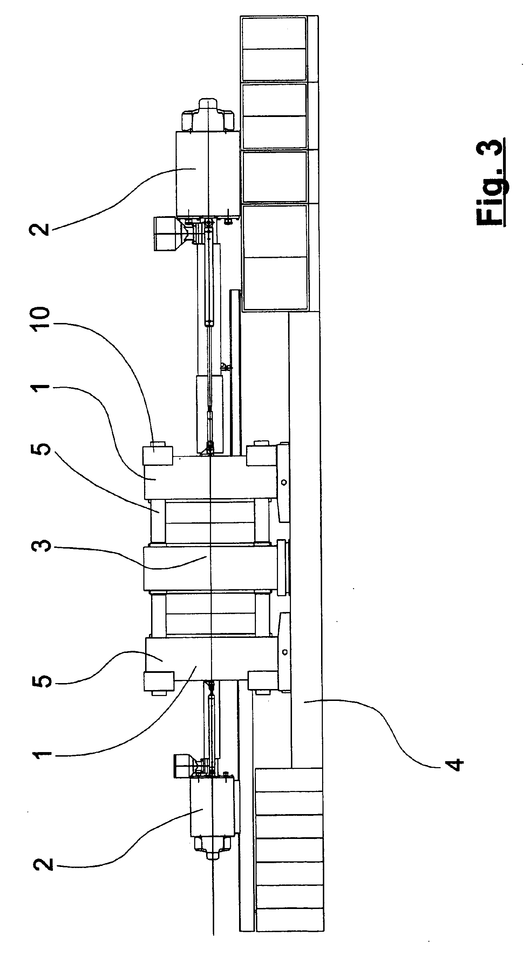

Fig. 3 zeigt die gleiche Vorrichtung im geschlossenen Zustand. Die in den verschieblichen Formaufspannplatten 1 angeordneten Holme 5 sind im Mittelteil 3 verankert. Über die Druckkissen 10 kann nun die Schließkraft aufgebracht werden und die Kunststoffmasse über die Plastifizier- und Einspritzeinheit 2 in die Form eingebracht werden. Sowohl das Mittelteil 3 als auch die verschieblichen Formaufspannplatten 1 stützen sich am Maschinenbett 4 ab.

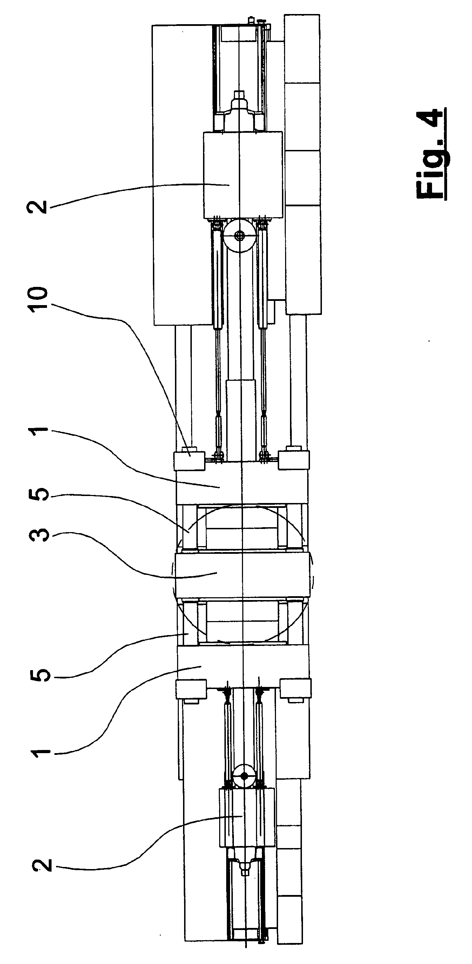

Fig. 4 zeigt die gleiche Anordnung in der Draufsicht.

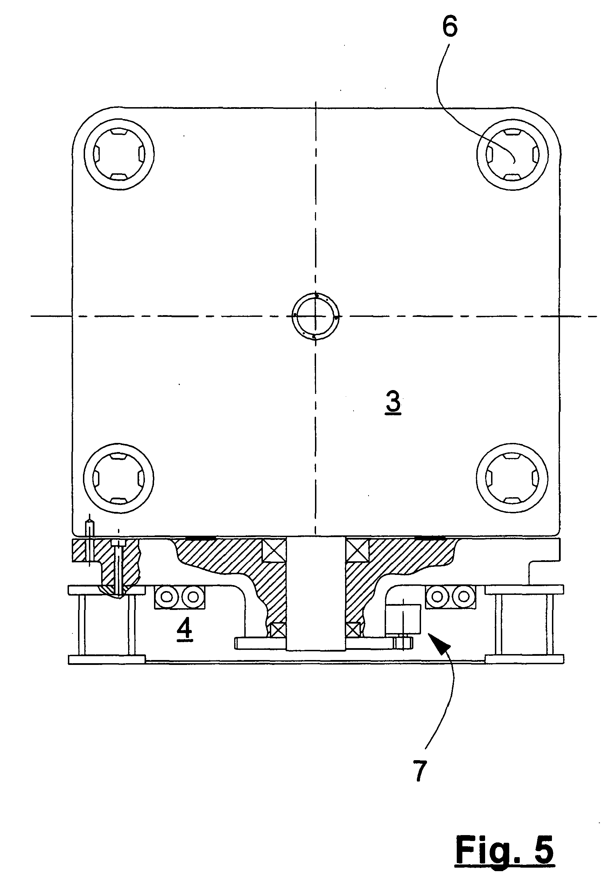

Fig. 5 zeigt einen Schnitt durch die Vorrichtung, so daß allein das Mittelteil sichtbar ist. Das Mittelteil 3 stützt sich am Maschinenbett 4 ab und ist über einen unter dem Mittelteil 3 angeordneten Drehantrieb 7 um seine Mittelachse drehbar. In die vier Aussparungen 6 können die Holme 5 eingeführt und entsprechend verriegelt werden.

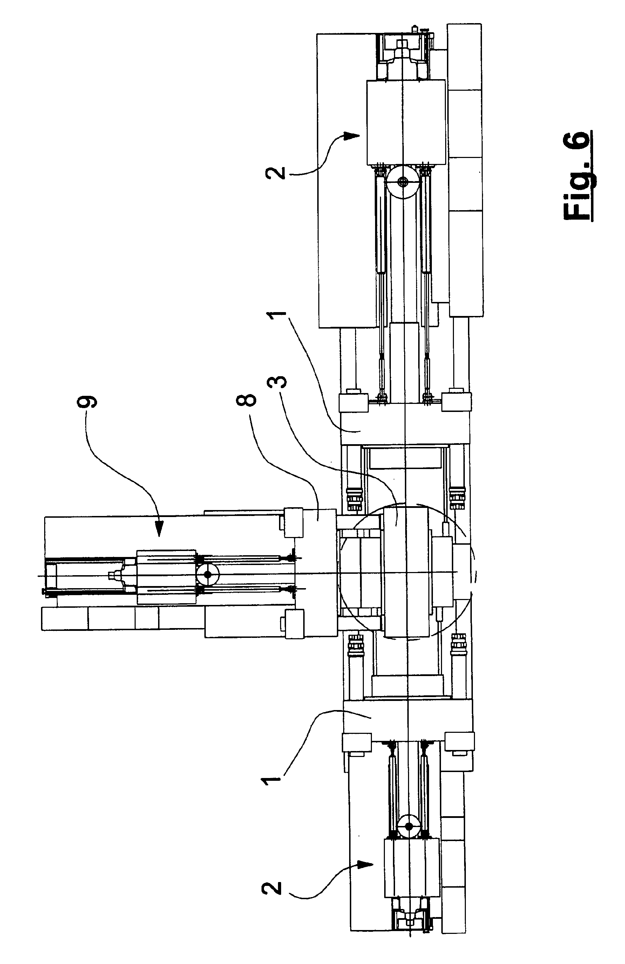

Eine weitere Ausführungsvariante ist in Fig. 6 dargestellt. Hier ist in der Ausführung gem. Fig. 2 eine weitere Plastifizier- und Einspritzeinheit 9 dargestellt. Diese Plastifizier- und Einspritzeinheit 9 ist weitestgehend im rechten Winkel zu den beiden ersten Plastifizier- und Einspritzeinheiten 2 aufgestellt und kann ebenso auf das Mittelteil 3 zubewegt werden. Hierbei befinden sich die beiden ersten Plastifizier- und Einspritzeinheiten 2 in ihrer Offenstellung, wobei der Öffnungsabstand so gewählt ist, daß die weitere Plastifizier- und Einspritzeinheit 9 ungehindert zwischen den Holmen 5 in analoger Weise die weitere Formaufspannplatte 8 mit dem Mittelteil 3 verankern kann.

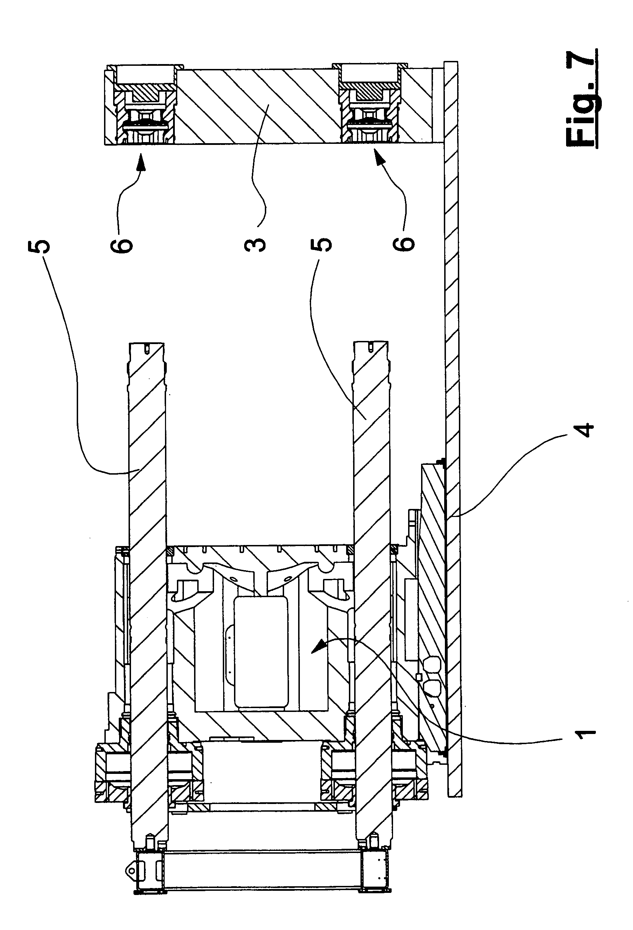

Fig. 7 zeigt einen Schnitt durch eine verschiebliche Formaufspannplatte und das Mittelteil. Die verschiebliche Formaufspannplatte 1 stützt sich ebenso wie das drehbare Mittelteil 3 auf dem Maschinenbett 4 ab. Die verschiebliche Formaufspannplatte 1 kann mit den Holmen 5 auf das Mittelteil 3 zubewegt werden, so daß die Enden der Holme 5 in die Aussparungen 6 eingreifen können und dort verriegelt werden.

### Bezugszeichenliste:

- 1: Verschiebliche Formaufspannplatte
- 2: Plastifizier- und Einspritzeinheit
- 3: Mittelteil
- 4: Maschinenbett
- 5: Holm
- 6: Aussparung im Mittelteil
- 7: Drehantrieb für Mittelteil
- 8: Weitere Formaufspannplatte
- 9: Weitere Plastifizier- und Einspritzeinheit
- 10: Mittel zum Krafterzeugen
- 11: Werkzeughälfte
- 12: Buchse mit Innenklauen in 6

## Patentansprüche

1. Vorrichtung zum Spritzgießen von plastischen Massen, die mindestens zwei verschiebliche Formaufspannplatten (1) umfaßt, an die je eine Plastifizier- und Einspritzeinheit (2) angeordnet ist, wobei die mindestens zwei verschieblichen Formaufspannplatten (1) aufeinander zu bewegbar sind, wobei zwischen den zwei verschieblichen Formaufspannplatten (1) ein drehbares Mittelteil (3) angeordnet ist,
wobei das Mittelteil (3) aus einem drehbaren und einem festen Teilelement besteht, wobei das drehbare Teilelement um seine vertikale Achse drehbar und das feste Teilelement ortsfest mit dem Maschinenbett (4) verbunden ist und somit seine Position, bezogen auf das Maschinenbett (4), nicht veränderbar ist,
wobei in jeder der verschieblichen Formaufspannplatten Holme (5) als Zugstangen angeordnet sind und diese auf der dazu abgewandten Seite mittels Verriegelungselemente verriegelbar sind,
und wobei die verschieblichen Formaufspannplatten (1) Düsenplatten sind,
**dadurch gekennzeichnet, dass**
die als Zugstangen ausgelegten Holme (5) mittels Verriegelungselementen mit den als Zugstangen ausgeführten Holmen (5) der gegenüberliegenden verschieblichen Formaufspannplatte (1) verriegelbar sind.

2. Vorrichtung nach Anspruch 1, **dadurch gekennzeichnet, dass** an der verschieblichen Formaufspannplatte (1) Mittel (10), vorzugsweise kurzhubige Hydraulikzylinder, vorgesehen sind, über die eine Zugkraft auf die Holme (5) aufgebracht werden kann.

3. Vorrichtung nach einem der Ansprüche 1 oder 2, **dadurch gekennzeichnet, dass** das drehbare Mittelteil (3) Aussparungen (6) aufweist, in denen Buchsen (12) angeordnet sind, in die die Holme (5) einführ- und festlegbar sind.

4. Vorrichtung nach Anspruch 3, **dadurch gekennzeichnet, dass** die Buchse (12) längsverschiebbar und/oder verdrehbar ist.

5. Vorrichtung nach einem der vorigen Ansprüche, **dadurch gekennzeichnet, dass** die verschieblichen Formaufspannplatten (1) im Maschinenbett (4) geführt werden.

6. Vorrichtung nach einem der vorigen Ansprüche, **dadurch gekennzeichnet, dass** die Plastifizier- und Einspritzeinheit (2) so an der verschieblichen Formaufspannplatte (1) angeordnet ist, daß diese bei Bewegung der Formaufspannplatte (1) mitgeführt wird.

7. Vorrichtung nach mindestens einem der vorigen Ansprüche, **dadurch gekennzeichnet, dass** ein Drehantrieb (7) für das drehbare Mittelteil (3) unter diesem angeordnet und im Maschinenbett (5) integriert ist.

8. Vorrichtung nach einem der vorigen Ansprüche, **dadurch gekennzeichnet, dass** das Mittelteil (3) um 360°, vorzugsweise um 180°, drehbar ist.

9. Vorrichtung nach mindestens einem der vorigen Ansprüche, **dadurch gekennzeichnet, dass** eine dritte verschiebliche Formaufspannplatte (8) mit einer daran angeordneten Plastifizier- und Einspritzeinheit (2) vorzugsweise rechtwinklig zu den beiden ersten verschieblichen Formaufspannplatten (1) angeordnet ist und ebenfalls auf das ortsfeste drehbare Mittelteil (3) zu bewegbar ist.

10. Vorrichtung nach einem der Ansprüche 1 bis 3, **dadurch gekennzeichnet, dass** das drehbare Mittelteil (3) Aussparungen (6) aufweist, in die querverschiebbare Verriegelungselemente angeordnet sind, in die die Holme (5) einführ- und festlegbar sind.

## Claims

1. Device for injection moulding plastic compounds, which comprises at least two movable platens (1), on each of which a plasticizing and injecting unit (2) is arranged, the at least two movable platens (1) being movable towards each other, a rotatable middle part (3) being arranged between the two movable platens (1), the middle part (3) comprising a rotatable part-element and a fixed part-element, the rotatable part-element being connected to the machine bed (4) in such a way that it can rotate about its vertical axis and the fixed part-element being connected to the machine bed (4) in such a way that it is fixed in place, and consequently cannot change its position with respect to the machine bed (4), tie bars (5) being arranged in each of the movable platens as tie rods and it being possible for the said tie bars to be locked on the side remote from said platens by means of locking elements, and the movable platens (1) being nozzle plates, **characterized in that** the tie bars (5) designed as tie rods can be locked by means of locking elements with respect to the tie bars (5) designed as tie rods of the opposite movable platen (1).

2. Device according to Claim 1, **characterized in that** means (10), preferably short-stroke hydraulic cylinders, by means of which a tensile force can be applied to the tie bars (5), are provided on the movable platen (1).

3. Device according to either of Claims 1 and 2, **characterized in that** the rotatable middle part (3) has clearances (6), arranged in which are bushes (12) in which the tie bars (5) can be inserted and fixed.

4. Device according to Claim 3, **characterized in that** the bush (12) is longitudinally movable and/or rotatable.

5. Device according to one of the preceding claims, **characterized in that** the movable platens (1) are guided in the machine bed (4).

6. Device according to one of the preceding claims, **characterized in that** the plasticizing and injecting unit (2) is arranged on the movable platen (1) in such a way that it is carried along when there is movement of the platen (1).

7. Device according to at least one of the preceding claims, **characterized in that** a rotary drive (7) for the rotatable middle part (3) is arranged under the latter and is integrated in the machine bed (4).

8. Device according to one of the preceding claims, **characterized in that** the middle part (3) is rotatable through 360°, preferably through 180°.

9. Device according to at least one of the preceding claims, **characterized in that** a third movable platen (8), with a plasticizing and injecting unit (2) arranged on it, is arranged preferably at right angles to the two first movable platens (1) and is likewise movable towards the fixed-in-place rotatable middle part (3).

10. Device according to one of Claims 1 to 3, **characterized in that** the rotatable middle part (3) has clearances (6), arranged in which are transversely movable locking elements in which the tie bars (5) can be inserted and fixed.

## Revendications

1. Dispositif de moulage par injection de pâtes en matière plastique, qui comprend au moins deux plaques coulissantes de serrage de moule (1) sur chacune desquelles est disposée une unité de plastification et d'injection (2), les au moins deux plaques coulissantes de serrage de moule (1) pouvant être rapprochées l'un de l'autre et une partie centrale rotative (3) étant disposée entre les deux plaques coulissantes de serrage de moule (1),
dans lequel la partie centrale (3) est constituée d'un élément rotatif et d'un élément fixe, l'élément rotatif pouvant tourner autour de son axe vertical et l'élément fixe étant relié solidairement au banc (4) de la machine, sa position par rapport au banc (4) de la machine n'étant donc pas modifiable,
et dans lequel, dans chacune des plaques coulissantes de serrage de moule, des montants (5) configurés comme tringles de traction sont disposés et peuvent être verrouillés sur leur côté non tourné vers la plaque au moyen d'éléments de verrouillage,
les plaques coulissantes de serrage de moule (1) étant des plaques à ajutage,
**caractérisé en ce que**
les montants (5) configurés comme tringles de traction peuvent être verrouillés au moyen d'éléments de verrouillage sur les montants (5) configurés comme tringles de traction de la plaque coulissante de serrage de moule (1) opposée.

2. Dispositif selon la revendication 1, **caractérisé en ce que** sur la plaque coulissante de serrage de moule (1) sont prévus des moyens (10), de préférence des vérins hydrauliques à courte course, qui permettent d'appliquer une force de traction sur les montants (5).

3. Dispositif selon l'une des revendications 1 ou 2, **caractérisé en ce que** la partie centrale rotative (3) présente des découpes (6) dans lesquelles sont disposées des douilles (12) dans lesquels les montants (5) peuvent être insérés et fixés.

4. Dispositif selon la revendication 3, **caractérisé en ce que** la douille (12) peut coulisser en longueur et/ou tourner.

5. Dispositif selon l'une des revendications précédentes, **caractérisé en ce que** les plaques coulissantes de serrage de moule (1) sont guidées dans le banc (4) de la machine.

6. Dispositif selon l'une des revendications précédentes, **caractérisé en ce que** l'unité de plastification et d'injection (2) est disposée sur la plaque coulissante de serrage de moule (1) de manière à être entraînée par la plaque de serrage de moule (1) lorsque cette dernière se déplace.

7. Dispositif selon au moins l'une des revendications précédentes, **caractérisé en ce qu'**un entraînement de rotation (7) de la partie centrale rotative (3) est disposé en dessous de cette dernière et est intégré dans le banc (5) de la machine.

8. Dispositif selon l'une des revendications précédentes, **caractérisé en ce que** la partie centrale (3) peut tourner sur 360° et de préférence sur 180°.

9. Dispositif selon au moins l'une des revendications précédentes, **caractérisé en ce qu'**une troisième plaque coulissante de serrage de moule (8) sur laquelle est disposée une unité de plastification et d'injection (2) est disposée de préférence à la perpendiculaire des deux premières plaques coulissantes de serrage de moule (1) et peut également être approchée de la partie centrale rotative fixe (3).

10. Dispositif selon l'une des revendications 1 à 3, **caractérisé en ce que** la partie centrale rotative (3) présente des découpes (6) dans lesquelles sont disposés des éléments de verrouillage aptes à coulisser transversalement et dans lesquels les montants (5) peuvent être insérés et fixés.
